# EUROPEAN PATENT APPLICATION

(11) **EP 1 239 250 A2**
(43) Date of publication of application: **11.09.2002**
(21) Application number: 02004979.7
(22) Date of filing: 05.03.2002
(51) Int. Cl.: F27D 17/00

(54) **Method and system for regenerating energy from the combustion exhaust gas of an industrial furnace, in particular a glass-melting furnace**

(30) Priority: 06.03.2001 IT MI010457
(71) Applicant: ANSALDO RICERCHE S.r.l., 16161 Genova (IT); STARA GLASS S.p.A., 16129 Genova (IT)
(72) Inventor: Guerreschi, Umberto, 16128 Genova (IT); Zanzi, Franco, 16148 Genova (IT); Mola, Alessandro, 20081 Abbiategrasso (IT); Bruno, Gianpaolo, 16013 Campoligure (IT); Santero, Augusto, 17014 Cairo Montenotte (IT)
(74) Representative: Jorio, Paolo

(57) **Abstract**

A method of regenerating energy from the combustion exhaust gas of an industrial furnace (2), in particular a glass-melting furnace, includes extracting a combustion exhaust gas stream (8) from the furnace (2), and preheating a combustion-supporting air stream (6), by which to eventually support combustion in the furnace, by heat exchange with the exhaust gas stream; the combustion-supporting air stream is preheated in a first and a second heat-exchange step distinct from each other and conducted in series and one after the other in a first (11) and, respectively, second (12) unit permitting heat exchange between the combustion-supporting air stream (6) and the exhaust gas stream (8); the combustion-supporting air stream (6) is circulated successively in the first unit (11) and then in the second unit (12), so as to be heated to respective increasing temperatures; and the exhaust gas stream (8) is circulated successively in the second unit (12) and then in the first unit (11), so as to be cooled to respective decreasing temperatures.

## Description

The present invention relates to a method and system for regenerating energy from the combustion exhaust gas of an industrial furnace, in particular a glass-melting furnace.

Glass is normally produced industrially by melting masses of solid raw materials (possibly including recycled glass) in a furnace, and the energy required for the melting process is supplied by burning fossil fuel in the presence of combustion-supporting air. The melting process, which calls for operating temperatures in the region of 1500-1600°C, uses a large amount of energy and produces considerable exhaust. On the other hand, the combustion exhaust gas from the furnace is relatively hot (typically in the region of 1500-1550°C), so that various attempts have been made to regenerate at least part of the exhaust gas heat, in particular to preheat the combustion-supporting air.

Two main methods of regenerating exhaust gas heat are known, and which are used respectively in so-called "unit melters" and "regenerative" furnaces.

Unit melters employ metal regenerators, in which part of the heat in the exhaust gas from the furnace is yielded to the combustion-supporting air stream in metal heat-exchange units. The scope of conventional metal regenerators, however, is strictly limited by the high temperature and corrosive nature of the exhaust gas and by the presence of particulates, so that energy regeneration is relatively poor: a unit melter with metal regenerators typically provides for preheating the combustion-supporting air to 700-800°C, with a maximum efficiency of 40%.

In regenerative furnaces, on the other hand, heat exchange between the exhaust gas from the furnace and the combustion-supporting air takes place in refractory-lined regeneration chambers fed alternatively with the exhaust gas and combustion-supporting air. Though relatively effective in terms of energy regeneration, by producing air preheated to 1200-1300°C with roughly 60% efficiency, this system has the major drawback of bringing the combustion-supporting air into contact with the particulate residue of the exhaust gas, and, owing to inevitable infiltration, produces a considerable increase in the volume of exhaust gas involved.

Moreover, unlike unit melters, regenerative furnaces fail to provide for effective combustion control. That is, having a combustion system distributed along the walls of the furnace, unit melters allow for controlling differential air and fuel supply along the furnace axis, thus enabling combustion in stages and a significant reduction in nitric oxide emissions, which, as is known, on account of the high flame temperature, constitute one of the most serious ecological problems of glass furnaces.

It is therefore an object of the present invention to provide a method and system for regenerating energy from the combustion exhaust gas of an industrial furnace, in particular a glass-melting furnace, designed to eliminate the aforementioned drawbacks of known technology, and which, in particular, provide for regenerating a significant amount of energy relatively cheaply and easily.

According to the present invention, there is provided a method of regenerating energy from the combustion exhaust gas of an industrial furnace, in particular a glass-melting furnace, the method comprising the steps of extracting a combustion exhaust gas stream from said furnace; and preheating a combustion-supporting air stream, by which to eventually support combustion in said furnace, by heat exchange with said exhaust gas stream; the method being characterized in that said step of preheating said combustion-supporting air stream comprises a first and a second heat-exchange step distinct from each other and conducted in series and one after the other in a first and, respectively, second unit permitting heat exchange between said combustion-supporting air stream and said exhaust gas stream; said combustion-supporting air stream being circulated successively in said first unit and then in said second unit, so as to be heated to respective increasing temperatures; and said exhaust gas stream being circulated successively in said second unit and then in said first unit, so as to be cooled to respective decreasing temperatures.

The combustion-supporting air stream for preheating and the exhaust gas stream which has already been fed through the second unit and cooled to below a predetermined temperature are therefore circulated in the first unit; and the combustion-supporting air stream from the first unit and the exhaust gas stream extracted directly from the furnace are circulated in the second unit.

In the course of both heat-exchange steps, the combustion-supporting air stream is kept separate from the exhaust gas stream; the first heat-exchange step is conducted in a metal heat-exchange unit; and the second heat-exchange step is conducted in a ceramic heat-exchange unit.

The present invention also relates to a system for regenerating energy from the combustion exhaust gas of an industrial furnace, in particular a glass-melting furnace, and designed to implement the method briefly described above.

According to the present invention, there is therefore provided a system for regenerating energy from the combustion exhaust gas of an industrial furnace, in particular a glass-melting furnace, the system comprising extracting means for extracting a combustion exhaust gas stream from said furnace; and heat-exchange means for preheating a combustion-supporting air stream, by which to eventually support combustion in said furnace, by heat exchange with said exhaust gas stream; the system being characterized in that said heat-exchange means comprise a first and a second heat-exchange unit distinct from each other and arranged in series one after the other; the system also comprising first circulating means for circulating said combustion-supporting air stream successively to said first unit and to said second unit; and second circulating means for circulating said exhaust gas stream successively to said second unit and to said first unit.

In other words, according to the invention, energy is regenerated from the high-temperature exhaust gas from the furnace in two distinct steps conducted at different temperatures in two distinct heat-exchange units. In a first medium-temperature (metal) heat-exchange unit, the combustion-supporting air is heated (to 700-800°C) by subtracting heat from an exhaust gas stream which has already been fed through the second high-temperature (ceramic) heat-exchange unit and therefore cooled to a temperature (roughly 1100-1300°C) compatible with the use of metal, and in particular counterflow, heat exchangers (thus increasing heat-exchange efficiency and eliminating any problems of severe thermal stress caused, as is known, by the counterflow configuration, which, in known technology, is rejected precisely on account of the high temperature of the exhaust gas) . The combustion-supporting air from the first medium-temperature heat-exchange unit is then heated further (to as much as roughly 1000-1100°C or over) in the second high-temperature heat-exchange unit, where it subtracts heat from the exhaust gas extracted directly from the furnace (at temperatures in the region of 1400-1500°C).

The advantages of the invention will be clear from the foregoing brief description, and can be summed up as follows:
- by regenerating a large amount of heat from the exhaust gas, the invention provides for supporting combustion in the furnace with air preheated to a much higher temperature (roughly 900-1000°C or over) than that obtainable by conventional unit melters, and which in turn provides for improving combustion and significantly reducing the formation of highly contaminating nitric oxides;
- overall energy consumption of the melting process is reduced, mainly by increasing thermal efficiency, as stated, by regenerating energy from the combustion exhaust gas and so increasing the temperature of the combustion-supporting air;
- the invention can be used on conventional furnaces, such as unit melters, in which combustion is distributed along the walls of the furnace, thus obtaining all the advantages of this type of furnace in terms of combustion control (differential air and fuel supply along the furnace axis) and particularly in terms of reducing pollutant emissions (nitric oxides);
- the specific solutions adopted by the invention provide for maximum cooling of the exhaust gas to slightly over the acid condensate limit (roughly 200°C), and so practically recovering as much heat as possible from the exhaust gas;
- by keeping the combustion-supporting air separate all times from the exhaust gas, the invention provides for producing a mass of clean hot air at the maximum temperature of the metal heat-exchange unit (700-750°C), and any surplus of which not required (as often happens) to support combustion in the furnace can be tapped for other uses; for the same reason, the air feed conduits of the furnace remain free of particulate deposits and fully functional by maintaining a constant cross section;
- the exhaust gas from the metal heat-exchange unit is cooled to a temperature compatible with more practical, effective purification processes, such as sleeve-filter conduits (besides drastically reducing dust content, sleeve filters also provide, by injecting basic additives, for reducing pollutants such as HCl, SO₂ and, in part, nitric oxides).

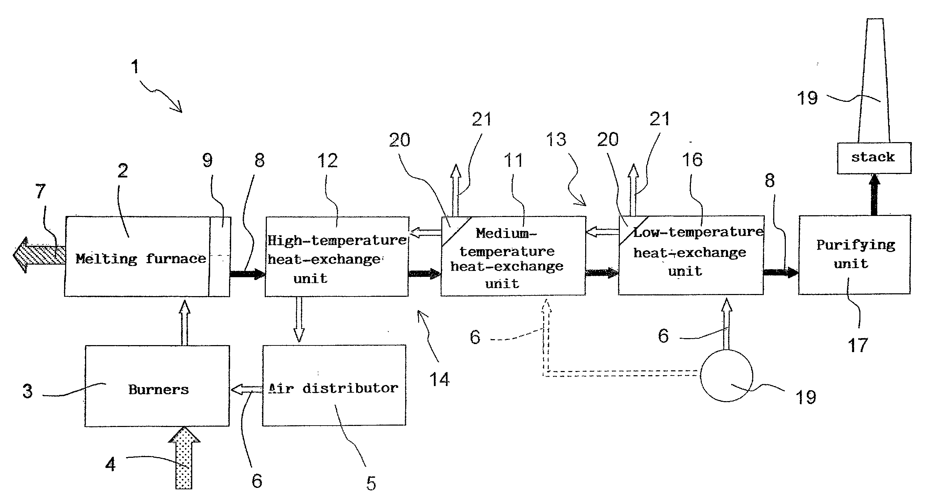

A non-limiting embodiment of the present invention will be described by way of example with reference to the accompanying drawing, which shows a block diagram of the method and system according to the invention.

Number 1 in the accompanying drawing indicates as a whole a system for regenerating energy from the combustion exhaust gas of an industrial glass-melting furnace 2, in particular a substantially known so-called "unit melter". Furnace 2 is equipped with burners 3 (e.g. distributed along the walls of the furnace), which are supplied with fuel 4 and, by means of a known air distributor 5, with a combustion-supporting air stream 6 (shown schematically by the white arrows). Combustion of fuel 4 and combustion-supporting air stream 6 generates the heat required to melt solid raw materials fed into furnace 2 to produce molten glass 7, and produces a combustion exhaust gas or fume stream 8 (shown schematically by the black arrows) which is extracted from furnace 2 by known extracting means 9.

System 1 comprises a first medium-temperature heat-exchange unit 11 and a second high-temperature heat-exchange unit 12, which are distinct from each other and arranged in series along respective circuits 13, 14 for circulating combustion-supporting air stream 6 and exhaust gas stream 8 respectively. Circuits 13, 14 are separate with no fluid-dynamic communication; and units 11, 12 have respective separate conduits for combustion-supporting air stream 6 and exhaust gas stream 8 respectively, which therefore at no time come into contact with each other, and are never mixed at any point within system 1.

Unit 11 is a metal heat-exchange unit comprising at least one metal exchanger, in particular a counterflow shell-and-tube exchanger, in which the combustion-supporting air stream 6 is circulated on the tube side, and the exhaust gas stream 8 on the shell side. Unit 12, on the other hand, is a ceramic heat-exchange unit comprising at least one ceramic, e.g. bayonet-tube-type, exchanger, and having separate conduits for combustion-supporting air stream 6 and exhaust gas stream 8.

System 1 advantageously, though not necessarily, also comprises a third low-temperature heat-exchange unit 16 in series with units 11, 12, and located along circuit 13, upstream from unit 11 in the flow direction of combustion-supporting air stream 6, and along circuit 14, downstream from unit 11 in the flow direction of exhaust gas stream 8. System 1 also comprises a known, preferably sleeve-filter-type, purifying unit 17 located along circuit 14, downstream from third unit 16 in the flow direction of exhaust gas stream 8, to purify exhaust gas stream 8 before it is emitted into the atmosphere by a stack 18.

Circuit 13 for circulating combustion-supporting air stream 6 connects in series an air inlet 19, unit 16, unit 11, unit 12, and air distributor 5 of furnace 2; circuit 14 for circulating exhaust gas stream 8 connects in series furnace 2, unit 12, unit 11, unit 16, purifying unit 17, and stack 18; and unit 11 and/or unit 16 may be provided with respective known branch means 20 for extracting, for collateral purposes, respective fractions of surplus air 21 from the combustion-supporting air stream 6 from units 11 and 16.

Unit 16 may be dispensed with, in which case, circuit 13 connects air inlet 19 directly to unit 11, as shown by the dash line in the drawing.

System 1 for implementing the method according to the invention operates as follows:

Exhaust gas stream 8 is extracted from furnace 2 and used to preheat combustion-supporting air stream 6 by which to eventually support combustion in furnace 2. According to the invention, combustion-supporting air stream 6 is preheated by heat exchange with exhaust gas stream 8 in two distinct heat-exchange steps conducted in series and one after the other in respective units 11, 12, and in the course of both of which, as throughout the method according to the invention, combustion-supporting air stream 6 and exhaust gas stream 8 never come into contact with each other and are never mixed. Combustion-supporting air stream 6 is circulated successively in unit 11 and then in unit 12, so as to be heated to respective increasing temperatures (e.g. roughly 700-900°C and roughly 1000-1100°C respectively); and exhaust gas stream 8 is circulated successively in unit 12 and then in unit 11, so as to be cooled to respective decreasing temperatures (e.g. roughly 1100-1300°C and roughly 500-600°C respectively).

The method according to the invention therefore substantially provides for circulating in first medium-temperature heat-exchange unit 11 the exhaust gas stream 8 which has already been fed through second high-temperature heat-exchange unit 12 and therefore cooled to below a predetermined temperature (at least below roughly 1300°C). In unit 11, exhaust gas stream 8 is further cooled by the combustion-supporting air stream 6 fed to unit 11 at relatively low temperature (possibly at ambient temperature, in the absence of unit 16). Through unit 12, on the other hand, are circulated the combustion-air stream 6 from unit 11, and the exhaust gas stream extracted directly from the furnace.

The exhaust gas stream 8 from unit 11 may be cooled further in unit 16, again by heat exchange with the combustion-supporting air stream 6 flowing through unit 16 before being supplied to unit 11. In unit 16, exhaust gas stream 8 is cooled to a final emission temperature compatible with purifying unit 17, which removes dust and pollutants from exhaust gas stream 8 before it is emitted into the atmosphere. Besides assisting in overall heat recovery from exhaust gas stream 8, unit 16 also provides for supplying purifying unit 17 with an exhaust gas stream 8 at a temperature compatible with the purifying processes, and for reducing the size of medium-temperature heat-exchange unit 11.

Clearly, changes may be made to the method and system as described and illustrated herein without, however, departing from the scope of the present invention.

## Claims

1. A method of regenerating energy from the combustion exhaust gas of an industrial furnace (2), in particular a glass-melting furnace, the method comprising the steps of extracting a combustion exhaust gas stream (8) from said furnace (2); and preheating a combustion-supporting air'stream (6), by which to eventually support combustion in said furnace, by heat exchange with said exhaust gas stream; the method being **characterized in that** said step of preheating said combustion-supporting air stream comprises a first and a second heat-exchange step distinct from each other and conducted in series and one after the other in a first (11) and, respectively, second (12) unit permitting heat exchange between said combustion-supporting air stream (6) and said exhaust gas stream (8); said combustion-supporting air stream (6) being circulated successively in said first unit (11) and then in said second unit (12), so as to be heated to respective increasing temperatures; and said exhaust gas stream (8) being circulated successively in said second unit (12) and then in said first unit (11), so as to be cooled to respective decreasing temperatures.

2. A method as claimed in Claim 1, **characterized in that** said combustion-supporting air stream (6) for preheating and the exhaust gas stream (8) which has already been fed through said second unit (12) and cooled to below a predetermined temperature are circulated in said first unit (11); and **in that** the combustion-supporting air stream (6) from said first unit (11) and the exhaust gas stream (8) extracted directly from said furnace (2) are circulated in said second unit (12).

3. A method as claimed in Claim 1 or 2, **characterized in that**, in the course of both said first and said second heat-exchange steps, said combustion-supporting air stream (6) is kept separate from said exhaust gas stream (8).

4. A method as claimed in one of the foregoing Claims, **characterized in that** said first heat-exchange step is conducted in a metal heat-exchange unit (11); and said second heat-exchange step is conducted in a ceramic heat-exchange unit (12).

5. A method as claimed in Claim 4, **characterized in that** said first heat-exchange step is conducted in a metal counterflow shell-and-tube exchanger, in which said combustion-supporting air stream is circulated on the tube side, and said exhaust gas stream is circulated on the shell side.

6. A method as claimed in Claim 4 or 5, **characterized in that** said second heat-exchange step is conducted in a ceramic bayonet-tube exchanger having separate conduits for said combustion-supporting air stream and said exhaust gas stream.

7. A method as claimed in one of the foregoing Claims, **characterized by** also comprising a purifying step (17) for purifying said exhaust gas stream (8) from said first unit (11) before said exhaust gas stream (8) is emitted into the atmosphere.

8. A method as claimed in one of the foregoing Claims, **characterized by** also comprising a third heat-exchange step in which said combustion-supporting air stream (6), before being fed to said first unit (11), is circulated in a third heat-change unit (16) located in series with said first and said second unit (11, 12) and for subtracting heat from said exhaust gas stream (8) from said first unit (11).

9. A system (1) for regenerating energy from the combustion exhaust gas of an industrial furnace (2), in particular a glass-melting furnace, the system comprising extracting means (9) for extracting a combustion exhaust gas stream (8) from said furnace; and heat-exchange means (11, 12) for preheating a combustion-supporting air stream (6), by which to eventually support combustion in said furnace, by heat exchange with said exhaust gas stream; the system being **characterized in that** said heat-exchange means comprise a first (11) and a second (12) heat-exchange unit distinct from each other and arranged in series one after the other; the system also comprising first circulating means (13) for circulating said combustion-supporting air stream (6) successively to said first unit (11) and to said second unit (12); and second circulating means (14) for circulating said exhaust gas stream (8) successively to said second unit (12) and to said first unit (11).

10. A system as claimed in Claim 9, **characterized in that** said first and said second circulating means comprise a first (13) and a second (14) circuit respectively, for circulating said combustion-supporting air stream (6) and said exhaust gas stream (8); said second unit (12) being located along said first circuit (13), downstream from said first unit (11) in the flow direction of said combustion-supporting air stream (6); and said second unit (12) being located along said second circuit (14), upstream from said first unit (11) in the flow direction of said exhaust gas stream (8).

11. A system as claimed in Claim 10, **characterized in that** said first and said second circuit (13, 14) are separate, with no fluid-dynamic communication with each other; said first and said second unit (11, 12) having respective separate conduits for said combustion-supporting air stream (6) and said exhaust gas stream (8) respectively.

12. A system as claimed in Claim 11, **characterized in that** said first unit (11) is a metal heat-exchange unit, and said second unit (12) is a ceramic heat-exchange unit.

13. A system as claimed in Claim 12, **characterized in that** said first unit (11) comprises at least one metal counterflow shell-and-tube exchanger, in which said combustion-supporting air stream (6) is circulated on the tube side, and said exhaust gas stream (8) is circulated on the shell side.

14. A system as claimed in Claim 12 or 13, **characterized in that** said second unit (12) comprises at least one ceramic bayonet-tube exchanger having separate conduits for said combustion-supporting air stream (6) and said exhaust gas stream (8).

15. A system as claimed in Claim 14, **characterized by** also comprising purifying means (17) for purifying said exhaust gas stream (8) from said first unit (11); said purifying means (17) being located along said second circuit (14), downstream from said first and said second unit (11, 12) in the flow direction of said exhaust gas stream (8).

16. A system as claimed in Claim 14 or 15, **characterized by** also comprising a third heat-exchange unit (16) located in series with said first and said second unit (11, 12); said third unit (16) being located along said first circuit (13), upstream from said first unit (11) in the flow direction of said combustion-supporting air stream (6), and along said second circuit (14), downstream from said first unit (11) in the flow direction of said exhaust gas stream (8).
